# EUROPÄISCHE PATENTSCHRIFT

(11) **EP 0 761 129 B1**
(45) Veröffentlichungstag und Bekanntmachung des Hinweises auf die Patenterteilung: **08.01.2003**
(21) Anmeldenummer: 96112639.8
(22) Anmeldetag: 05.08.1996
(51) Int. Cl.: A47B 87/00, A47B 13/02, F16B 12/40, A47B 13/06

(54) **System zum Erstellen variabler Tischkonfigurationen**
System for creating changeable table configurations
Système pour établir différentes configurations de tables

(30) Priorität: 22.08.1995 DE 19530780
(43) Veröffentlichungstag der Anmeldung: 12.03.1997
(73) Patentinhaber: Sedus Stoll AG, 79761 Waldshut-Tiengen (DE)
(72) Erfinder: Kallup, Bernhard, Dr., 79809 Weilheim (DE); Stenzel, Thomas, 79761 Waldshut-Tiengen (DE); Zwetz, Martin, 79761 Waldshut-Tiengen (DE); Fedderke, Helge, 45144 Essen (DE); Gelen, Norbert, 45147 Essen (DE); Schmitz, Stephan, 45141 Essen (DE); Münter, Frank, 45144 Essen (DE); Lengyel, Stefan, Prof., 45141 Essen (DE)
(74) Vertreter: Lück, Gert, Dr.

(56) Entgegenhaltungen:
- EP-A- 0 332 096
- DE-A- 2 155 234
- FR-A- 2 135 510
- GB-A- 2 147 387

## Beschreibung

### TECHNISCHES GEBIET

Die Erfindung betrifft ein System zum Erstellen variabler Tischkonfigurationen nach dem Oberbegriff des Anspruchs 1.

Solche Systeme sind oftmals notwendig für Konferenzen, Festessen und dergleichen. Dabei soll das System nicht nur leicht aufzustellen sein, sondern seine Elemente sollen gleichzeitig auch leicht abzubauen, wegzuräumen und abzulagern sein.

### STAND DER TECHNIK

Eine solches System ist zum Beispiel aus einem Tischprogramm der Firma COR Helmut Lübke GmbH & Co unter der Bezeichnung "COR projekt" bekannt, bei welchem die kreiszylindrischen Tischbeine einen Lamellenkopf aufweisen, in dessen sich in Längsrichtung des Beines erstreckenden Lamellen Tischtraversen höhenverstellbar eingeklemmt werden können.

Dieses Konzept ermöglicht zwar die Verkettung mit anderen Tischplatten, jedoch ist der Verkettungsvorgang relativ kompliziert und nicht ohne Werkzeug zu bewerkstelligen. Das bekannte Konzept stellt daher kein flexibles Verkettungssystem dar, dessen primäre Qualität in den handhabungsfreundlichen Auf- und Umbaumöglichkeiten liegt. Ferner erfordert die Herstellung des Lamellenkopfes einigen fabrikatorischen Aufwand. Des weiteren sind die Elemente dieses bekannten Systems nach Abbau nicht ohne Probleme abzulagern.

DE-GM 94 16 016.3 beschreibt ein System zum Erstellen variabler Tisch-Konfigurationen, bei welchem Tische unter Bildung durchgehender Plattenflächen miteinander verkettbar sind. Die Tische als Elemente dieses Systems umfassen jeweils eine Tischplatte mit mindestens einer geradlinigen Seitenkante, je einem Verbindungsknoten in Form einer vertikal orientierten Hülse an den beiden Enden der Seitenkante, und Standsäulen, die mit den Verbindungsknoten fest verbindbar sind. Im Bereich der Hülsen sind umlaufende Ringnuten vorgesehen, in welche Ringplatten einsetzbar sind, die weitere Ringformen aufweisen, welche in die Ringnut der korrespondierenden Hülse der anzukettenden Tischplatte einsetzbar sind. Eine Verkettung der Tischplatten ist auch dadurch möglich, dass die unter der Platte verlaufenden Traversen einen dreieckförmigen oder trapezförmigen Querschnitt aufweisen, und mittels übergreifender, federnder, einschnappender Klammem miteinannder verbunden werden.

Der wesentliche Nachteil dieses bekannten Systems besteht darin, dass seine Montage bzw. Demontage relativ kompliziert ist. Die Verbindung über die Klammern erfordert spezielle Profilquerschnitte und macht die Lagerhaltung und Fabrikation aufwendig.

DE-GM 90 06 147.0 beschreibt ein Gestell mit Stangen aus Rundprofil und Eckverbindern, die die Form eines Würfels mit kreisförmigen Seitenflächen aufweisen. Auf diese Seitenflächen werden kreisrunde Rohre des gleichen Durchmessers dadurch aufgeschraubt, dass in ihnen Steckteile verspreizt werden, die ihrerseits mittels Schrauben an dem Würfel befestigt werden.

Diese bekannte Technik taugt in der Praxis schon deshalb nicht zum Verketten von Tischplatten, weil die Verbindung der Rohre mit den Würfeln recht aufwendig ist.

FR 2 402 430 beschreibt ein Gestell aus Rundrohren; dessen Eckverbindungen dreiarmige Steckhülsenelemente sind.

Auch diese bekannten Systeme sind demnach wenig flexibel und handhabungsfreundlich soweit die Verkettung von Tischplatten betroffen ist.

Ein System, das als Basis für eine Tischverkettung gut geeignet ist, ist in der DE-A 2'155'234 beschrieben: dort wird ein nach dem Baukastenprinzip zusammensetzbares Gestell beschrieben, bei welchem rohrförmige Standsäulen als Stützorgane und rohrförmige Traversen als Tragorgane für Tischplatten über als Verbindungsknoten wirkende Eckverbindungsstücke verbunden sind. Die Verbindungsknoten bestehen aus einem Kopf mit drei Armen, wobei an zwei Armen die Traversen befestigt sind, und an einem Arm die Standsäule. Arme und Standsäule sind an den Armen mittels einer lösbaren Klemmverbindung befestigt.

Obwohl dieses bekannte System als Basis für eine Tischverkettung geeignet ist, werden keine Hinweise gegeben, wie eine solche Verkettung bewerkstelligt werden könnte.

Eine Eckverbindung für einen Tisch, bei welcher zwei Arme für die Tragtraversen und ein Arm für die Standsäule vorgesehen ist, ist auch aus FR-A 2'135'510 bekannt. Auch diese Schrift gibt jedoch keinen Hinweis auf eine Tischverkettung. Aus EP-A 0'332'096 ist zwar ein Bauelement zur Verkettung eines Tisches mit einem anderen in Form eines schwenkbaren Auflagegliedes bekannt, jedoch ist diese Konzeption seh unflexibel, sperrig und aufwendig zu montieren.

Alle bekannten Lösungen erfüllen demnach die Anforderungen an ein modernes System zum Erstellen variabler Tisch-Konfigurationen nicht.

### DARSTELLUNG DER ERFINDUNG

Es ist daher die Aufgabe der Erfindung, ein System zu konzipieren, welches einerseits die handhabungs- und umbaufreundliche Verkettung von Tischelementen ermöglicht, und dessen Elemente kostengünstig herzustellen sind, und das andererseits leicht abzubauen und abzulagern ist. Ferner muss es darüberhinaus natürlich im aufgebauten Zustand auch ästhetisch ansprechen. Diese Aufgabe wird durch die Merkmale des Anspruchs 1 und der Unteransprüche gelöst.

Der Kern der Erfindung besteht darin, dass bei dem erfindungsgemäßen System als Elemente Tischplatten prinzipiell gleichen Aufbaus, jedoch in verschiedenen Formaten (z.B. 80er Raster, 70er Raster) und Formen (z.B. Rechteck, Quadrat, Trapez, Dreieck) vorgesehen sind, die in einfacher Weise miteinander verkettbar oder voneinander lösbar und durch Aufschrauben der Standsäulen bzw. Tischbeine zu Tischen komplettierbar sind, wobei diese Tischplatten bei abgeschraubten Beinen problemlos und kleinräumig lagerbar sind. Die System-Elemente sind robust und kostengünstig herzustellen, und das aufgebaute System ist sicher und stabil.

### KURZE BESCHREIBUNG DER ZEICHNUNGEN

Nachstehend wird die Erfindung anhand von in Zeichnungen dargestellten Ausführungsbeispielen näher erläutert. Dabei zeigt:
Fig.1 die perspektivische Ansicht in Explosions-Darstellung einer Tisch-Ecke mit zugehörigen Verbindungsknoten, Traversen und Standsäule,
Fig.2 eine Ansicht wie in Fig.1 jedoch ohne Standsäule und Details des Verbindungsknotens, aber mit Lasche und Plastikstopfen,
Fig.3 eine Ansicht wie in Fig. 1, wobei hier zwei Elemente über die Lasche verbunden sind,
Fig.4 eine Detailzeichnung des Verbindungsknotens,
Fig.5a die Kunststoffklammer, und

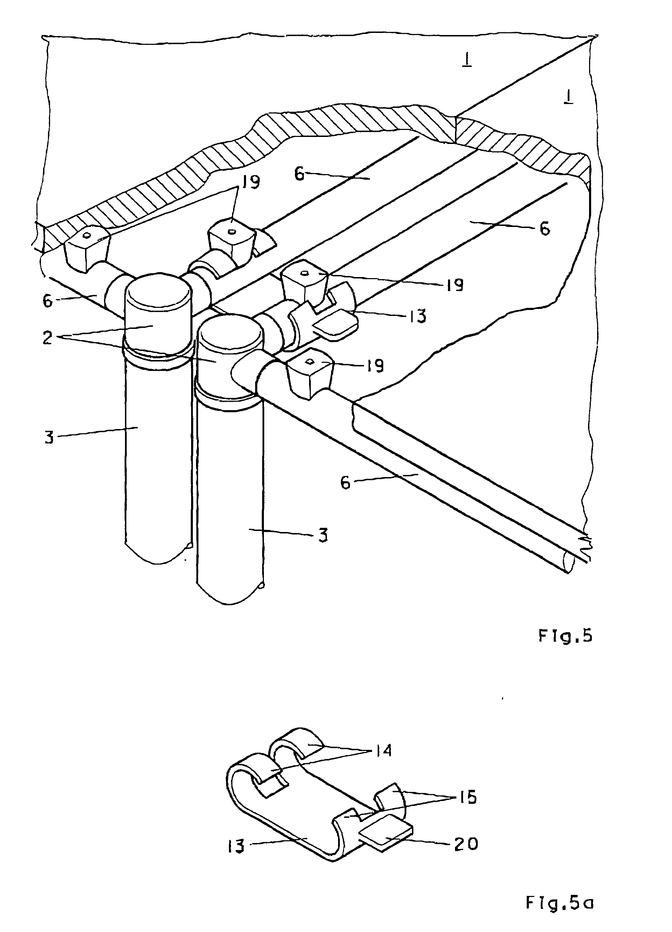

Fig.5 die Kunststoffklammer eingesetzt zur Verbindung zweier Elemente.

### WEGE ZUR AUSFÜHRUNG DER ERFINDUNG

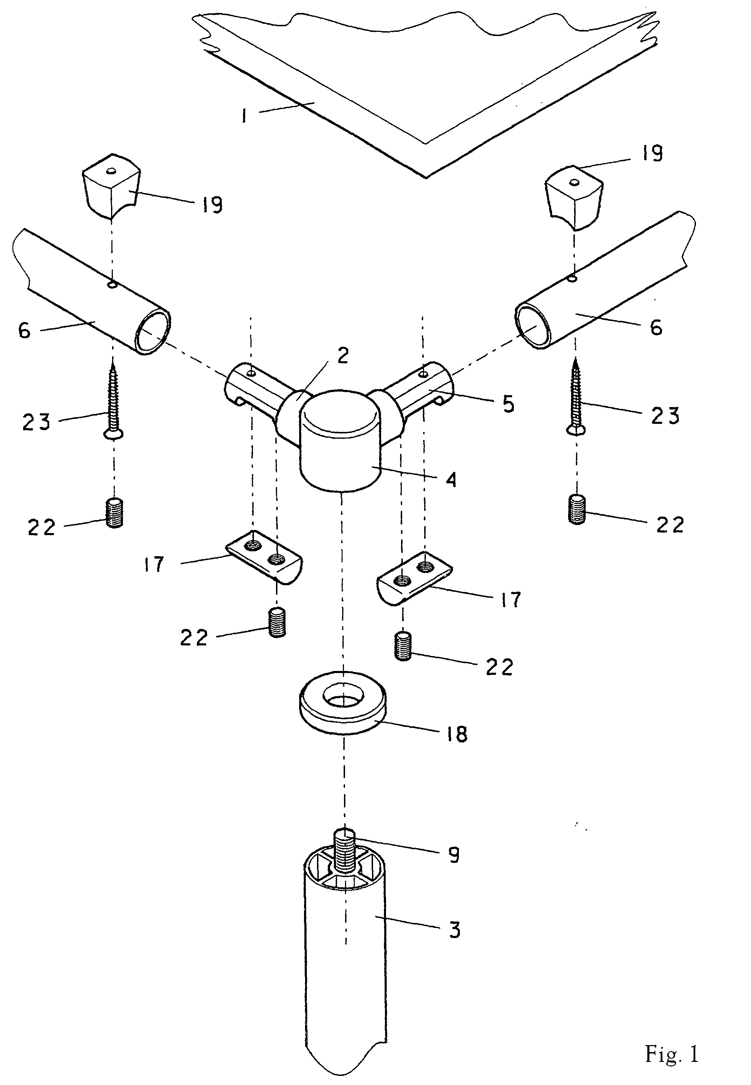

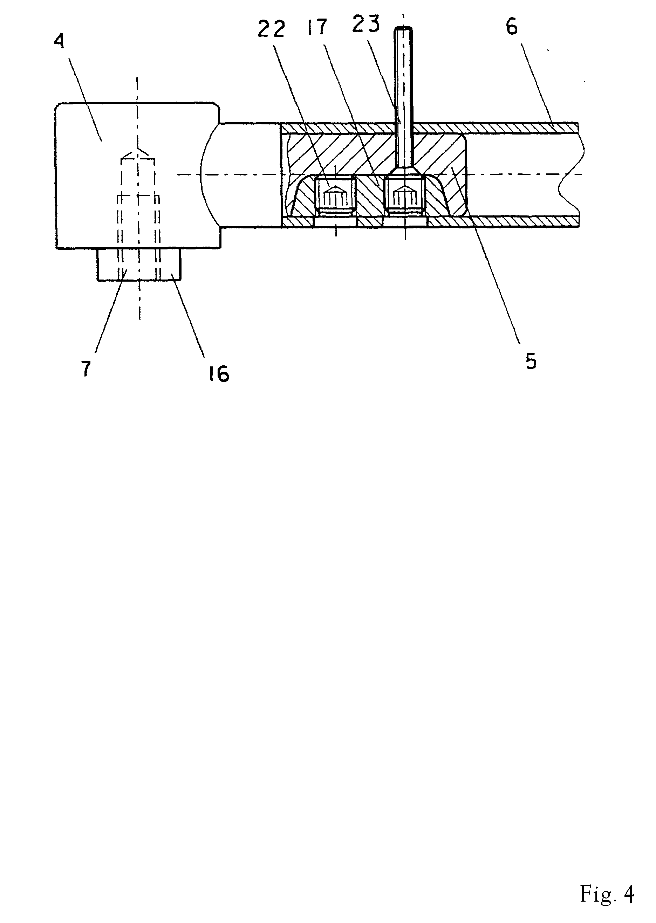

In Fig.1 ist eine rechteckige Tischplatte 1 dargestellt, zu deren Seitenkanten die Traversen 6 gehören. Ferner ist der Verbindungsknoten 2 dargestellt, der einen Kopf 4 und zwei Arme 5 umfasst. Die Traversen 6 sind als Präzisions-Stahlrohre ausgebildet, in welche die Arme 5 des Verbindungsknotens 2 schlüssig eingeführt werden können. An ihrer Unterseite weisen die Arme 5 Ausnehmungen auf, in welche Druckstücke 17 eingepasst sind. Wie näher in Fig.4 gezeigt werden diese Druckstücke 17 mittels der Gewindestifte 22 gegen die Innenwand der Traverse 6 gespannt, wodurch der Halt zwischen dem Verbindungsknoten 2 und den Traversen 6 hergestellt wird. Des weiteren zeigen Fig.1 und 4 bei einer Bohrung für einen Gewindestift 22 an der Oberseite der Traverse 6 zusätzlich eine weitere Bohrung für eine Spanplattenschraube 23, mittels welcher die Traverse 6 über das Distanzstück 19 an der Tischplatte 1 angeschraubt wird.

Femer ist aus Fig.1 und 4 ersichtlich, dass der Kopf 4 des Verbindungsknotens 2 eine Bohrung 7 aufweist, in welche die Standsäule 3 mittels des Gewindezapfens 9 eingeschraubt werden kann. Die Standsäule 3 ist zweckmäßigerweise ein Aluminium-Strangpressprofil, in welches der Gewindezapfen 9 eingeschraubt ist. Weiter weist der Kopf 4 einen Bund 16 auf, über den eine Distanzscheibe 18 gelegt werden kann, die den Abstand zwischen Kopf 4 und Säule 3 regelt. Statt der Distanzscheibe 18 kann auch die Lasche 10 eingesetzt werden, vorzugsweise über ihr als Langloch ausgebildetes erstes Loch 11.

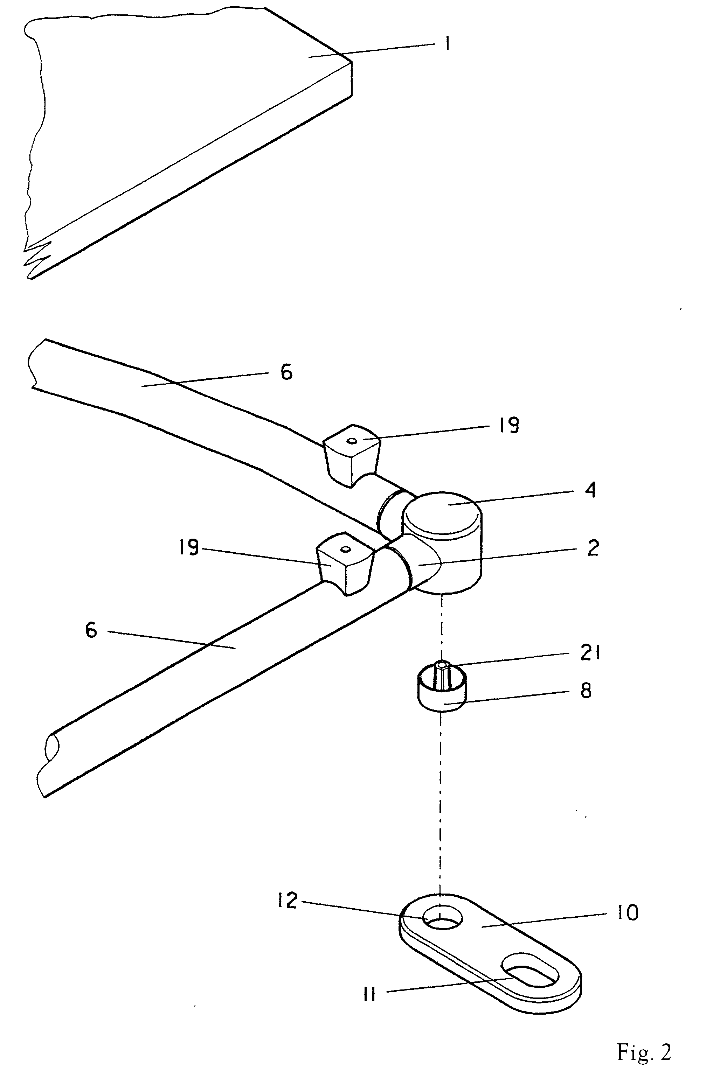

Die Lasche 10 mit den beiden Löchern 11 und 12 ist in Fig. 2 dargestellt. Wie gesagt, wird sie mit ihrem Langloch 11 zwischen Standsäule 3 und Kopf 4 eines Verbindungsknotens 2 an einer Tischplatte 1 eingeschraubt (Fig.1). In ihr anderes Loch 12 kann dann der Kopf 4 des Verbindungsknotens 2 einer benachbarten Tischplatte 1 eingehängt werden (Fig.2). Dies erfolgt mittels des Plastikstopfens 8. Dieser ist topfförmig ausgebildet. Er besteht z.B. aus Polypropylen. In seiner Mitte weist er einen konischen und gerippten Zapfen 21 auf. Mit diesem Zapfen 21 wird er in die Bohrung 7 (Fig.4) des Kopfes 4 eingedrückt. Der innere Teil des Topfes umfasst dann den Bund 16 des Kopfes 4. Der äußere Teil des Topfes weist einen Durchmesser auf, der etwas über dem Durchmesser des Loches 12 der Lasche 10 liegt, sodass sich ein fester, schwergängiger Sitz des Stopfens 8 im Loch 12 ergibt. Im ausgehängten Zustand dient der Stopfen 8 als oberflächenschonendes Element beim Stapeln der Tischplatten 1.

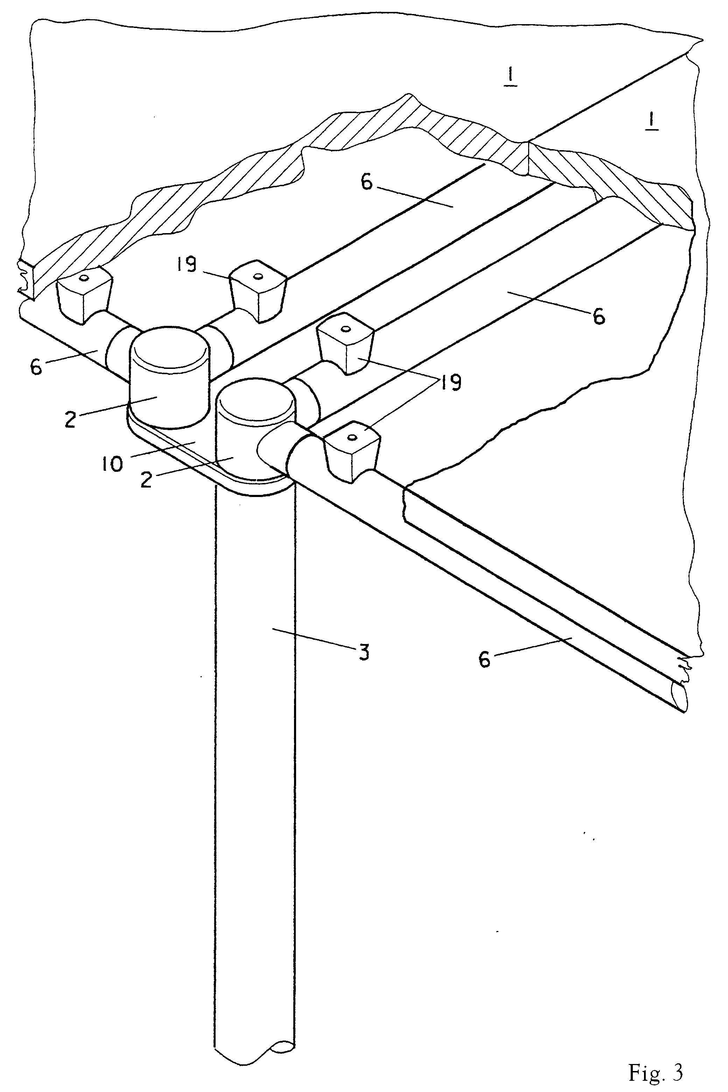

In Fig. 3 ist die beschriebene Verbindung im ausgeführten Zustand dargestellt: In die zwischen Verbindungsknoten 2 und Standsäule 3 eingeschraubte Lasche 10 ist der Verbindungsknoten 2 der benachbarten Tischplatte 1 mittels des (hier nicht gezeigten) Plastikstopfens 8 eingehängt.

Wie ersichtlich wird bei der in Fig.3 gezeigten Konzeption eine Standsäule 3 eingespart, was nicht nur von der Materialersparnis her vorteilhaft ist, sondern auch die Beinfreiheit der Benutzer erhöht und der Tischkombination ästhetisch ein leichteres Bild gibt.

Wo es jedoch - aus welchen Gründen auch immer - nicht möglich oder erwünscht ist, von der in Fig.3 gezeigten vorteilhaften Verkettung Gebrauch zu machen, ist eine Verkettung wie in Fig.5 gezeigt möglich und vorteilhaft:
Hier erfolgt die Verkettung über die Kunststoffklammer 13, die in Großansicht in Fig.5a dargestellt ist. Diese Klammer besteht z.B. aus Polypropylen. Sie weist kreisförmig gebogene Greifer 14 und 15 auf, deren Radius etwas unter dem der rohrförmigen Traversen 6 liegt, sodass sich die Klammer 13 in festem Sitz auf die Traverse 6 klemmen lässt. Die Klammer 13 wird mit ihrem Greifer 14 auf die Traverse 6 eines ersten Tisch-Elementes geklemmt. Wenn dann ein benachbartes Tisch-Element zur Verkettung daneben gestellt wird, kann die Klammer 13 mittels des Griffes 20 über die Traverse 6 dieses Elementes geschwenkt werden.
Statt der in Fig.2 und 3 gezeigten Verkettung über den in das Loch 12 der Lasche 10 eingreifenden Plastistopfen 8 ist es auch möglich, den Stopfen 8 zu entfernen, das Loch 12 über den Bund 16 des Kopfes 4 zu ziehen, und die Lasche dann über eine nicht gezeigte Rändelschraube am Kopf 4 zu befestigen. Mit dem erfindungsgemäßen System wird es möglich, aus kleinräumig lagerbaren Tischplatten gleichen Aufbaus jedoch verschiedener Formate und
Formen in einfacher Weise stabile und ästhetisch ansprechende Tischkonfigurationen unterschiedlichster Art herzustellen, wobei der Herstellungsaufwand der System-Elemente bescheiden und damit sehr kostengünstig ist.

### Bezeichnungsliste

- 1: Tischplatte
- 2: Verbindungsknoten
- 3: Standsäule
- 4: Kopf
- 5: Arm
- 6: Traverse
- 7: Bohrung (im Kopf)
- 8: Plastikstopfen
- 9: Gewindezapfen (an Standsäule)
- 10: Lasche
- 11: erstes Loch (Langloch)
- 12: zweites Loch (Kreisloch)
- 13: Kunststoff-Klammer
- 14: erster Greifer
- 15: zweiter Greifer
- 16: Bund
- 17: Druckstück
- 18: Distanzscheibe
- 19: Distanzstück
- 20: Griff
- 21: Zapfen
- 22: Gewindestift
- 23: Spanplattenschraube

## Patentansprüche

1. System zum Erstellen variabler Tisch-Konfigurationen, bei welchem Tische unter Bildung durchgehender Plattenflächen miteinander verkettbar sind, und welches mindestens die folgenden Teile umfasst:
- zwei Tischplatten (1) mit mindestens einer geradlinigen Seitenkante,
- drei an sich bekannte Verbindungsknoten (2) an beiden Enden der Seitenkanten, wobei ein Verbindungsknoten (2) aus einem Kopf (4) mit zwei Armen (5) besteht, die sich in unterschiedlicher Richtung parallel zur Tischplatte (1) erstrecken und zur Verbindung mit je einer Traverse (6) ausgebildet sind, welche unter der Tischplatte (1) befestigbar sind, und der Kopf (4) senkrecht zur Tischplatte (1) eine Gewinde-Bohrung (7) aufweist, und
- drei Standsäulen (3), die mittels Gewindezapfen (9) in die GewindeBohrungen (7) einschraubbar sind,
**dadurch gekennzeichnet, dass**
- zum Verketten der Tischplatten (1) mindestens ein Verkettungsglied (10;13) vorgesehen ist,
- das aus einer Lasche (10) mit zwei Löchern (11,12) besteht, die über ihr eines Loch (11) mittels der Standsäule (3) an dem Kopf (4) des Verbindungsknotens (2) anschraubbar ist, und in deren anderem Loch (12) der Kopf (4) eines Verbindungsknotens (2) einer benachbarten Tischplatte (1) befestigbar ist,
- oder einer das aus elastischen Kunststoff-Klammer (13) besteht, die mittels eines ersten Greifers (14) schwenkbar auf die Traverse (6) eines ersten Tisch-Elementes aufsetzbar ist, und mittels eines zweiten Greifers (15) auf die Traverse (6) eines zweiten, dem ersten Element benachbarten Tisch-Elementes aufklammerbar ist.

2. System nach Anspruch 1, **dadurch gekennzeichnet, dass**
- der Kopf (4) des Verbindungsknotens (2) auf der Seite der Bohrung (7) einen zylindrischen Bund (16) aufweist, dessen Durchmesser dem des zweiten Loches (12) der Lasche (10) entspricht,
- die an den Armen (5) des Verbindungsknotens (2) befestigbaren Traversen (6) rohrförmig ausgebildet sind,
- die Arme (5) des Verbindungsknotens (2) zusammmen mit einem Druckstück (17) in die Traversen (6) einführbar sind, und die Druckstücke (17) mittels Gewindestiften (18) in der Traverse (6) verspannbar sind, und
- Distanzstücke (19) vorgesehen sind, über welche die Traversen (6) an der Tischplatte (1) befestigbar sind.

3. System nach Ansprüchen 1 und 2, **dadurch gekennzeichnet, dass** die beiden Greifer (14,15) der Kunststoff-Klammer (13) jeweils aus zwei Fingern bestehen, die die Traversen (6) auf den beiden Seiten eines Distanzstückes (19) umgreifen, und die Kunststoff-Klammer (13) einen Griff (20) zum manuellen Schwenken aufweist.

4. System nach Anspruch 1, **dadurch gekennzeichnet, dass**
- in die Gewinde-Bohrung (7) des Kopfes (4) ein Plastikstopfen (8) eingeschraubt ist,
- dieser Plastik-Stopfen (8) topfförmig mit einem zentrischen Zapfen (21) ausgebildet ist,
- der Innendurchmesser des Topfes derart ist, dass er den Bund (16) am Kopf (4) des Verbindungsknotens (2) umfasst,
- der Außendurchmesser des Topfes derart ist, dass er schwergängig in das Loch (12) einer Lasche (10) eindrückbar ist, und
- der Zapfen (21) konisch ausgebildet und gerippt ist derart, dass er durch Eindrücken in der Bohrung (7) des Kopfes (4) des Verbindungsknotens (2) befestigbar ist.

5. System nach einem der vorhergehenden Ansprüche, **dadurch gekennzeichnet, dass** alle Tischplatten (1) im Aufbau gleich sind, jedoch unterschiedliche Raster-Formate und geometrische Formen aufweisen.

6. System nach einem der vorhergehenden Ansprüche, **dadurch gekennzeichnet, dass** die Verbindungsknoten (2) Aluminium-Gussteile sind, und die Standsäulen (3) Aluminium-Strangpressprofile.

7. System nach Anspruch 1, **dadurch gekennzeichnet, dass** die Lasche (10) in dem Loch (12), das nicht über die Standsäule (3) an dem ersten Verbindungsknoten (2) angeschraubt ist, an dem zweiten Verbindungsknoten (2) mittels einer Rändelschraube befestigbar ist.

## Claims

1. System for producing variable table configurations, in the case of which tables can be interlinked with one another to form continuous table-top surfaces, and which comprises at least the following parts:
- two table tops (1) with at least one rectilinear side edge,
- three connecting joints (2) which are known per se at two ends of the side edges, a connecting joint (2) comprising a head (4) with two arms (5) which extend in different directions parallel to the table top (1) and are each designed for connection to a crossmember (6), which can be fastened beneath the table top (1), and the head (4) having a threaded bore (7) perpendicular to the table top (1), and
- three uprights (3) which can be screwed into the threaded bores (7) by means of threaded stubs (9),
**characterized in that**
- provided for interlinking the table tops (1) is at least one interlinking element (10; 13),
- which comprises a link plate (10), with two holes (11, 12), which can be screwed, via one hole (11), to the head (4) of the connecting joint (2) by means of the upright (3), and in the other hole (12) of which it is possible to fasten the head (4) of a connecting joint (2) of an adjacent table top (1),
- or which comprises an elastic clamp (13) which is made of plastic and, by means of a first gripper (14), can be positioned in a pivotable manner on the crossmember (6) of a first table element and, by means of a second gripper (15), can be clamped onto the crossmember (6) of a second table element, adjacent to the first element.

2. System according to Claim 1, **characterized in that**
- the head (4) of the connecting joint (2), on the side of the bore (7), has a cylindrical collar (16), the diameter of which corresponds to that of the second hole (12) of the link plate (10),
- the crossmembers (6), which can be fastened on the arms (5) of the connecting joint (2), are of tubular design,
- the arms (5) of the connecting joint (2) can be introduced, together with a pressure-exerting element (17), into the crossmembers (6), and the pressure-exerting elements (17) can be braced in the crossmember (6) by means of threaded pins (18) [sic], and
- spacer elements (19) are provided, these making it possible to fasten the crossmembers (6) on the table top (1).

3. System according to Claims 1 and 2, **characterized in that** the two grippers (14, 15) of the plastic clamp (13) each comprise two fingers which engage around the crossmembers (6) on the two sides of a spacer element (19), and the plastic clamp (13) has a grip (20) for manual pivoting purposes.

4. System according to Claim 1, **characterized in that**
- a plastic stopper (8) is screwed into the threaded bore (7) of the head (4),
- this plastic stopper (8) is of cup-like design with a central stub (21),
- the internal diameter of the cup is such that it encloses the collar (16) on the head (4) of the connecting joint (2),
- the external diameter of the cup is such that it can be forced with a tight fit into the hole (12) of a link plate (10), and
- the stub (21) is of conical design and is ribbed such that it can be fastened by being forced into the bore (7) of the head (4) of the connecting joint (2).

5. System according to one of the preceding claims, **characterized in that** all the table tops (1) are of the same construction, but have different grid formats and geometrical shapes.

6. System according to one of the preceding claims, **characterized in that** the connecting joints (2) are aluminium castings and the uprights (3) are extruded aluminium profiles.

7. System according to Claim 1, **characterized in that** the link plate (10) can be fastened in the hole (12), which is not screwed to the first connecting joint (2) via the upright (3), on the second connecting joint (2) by means of a knurled-head screw.

## Revendications

1. Système pour établir différentes configurations de table, dans lequel des tables peuvent être assemblées les unes aux autres en formant une surface de table continue, et qui comporte au moins les parties suivantes:
- deux tablettes de table (1) présentant au moins un bord latéral rectiligne,
- trois noeuds de liaison (2) connus en soi aux deux extrémités des bords latéraux, un noeud de liaison (2) étant constitué d'une tête (4) dotée de deux bras (5) qui s'étendent parallèlement à la tablette de table (1) dans une direction différente et qui sont configurés chacun pour la liaison à une traverse (6) qui peut être fixée en dessous de la tablette de table (1), et la tête (4) présentant un alésage fileté (7) perpendiculaire à la tablette de table (1), et
- trois colonnes de pose (3) qui peuvent être vissées dans les alésages filetés (7) au moyen de tourillons filetés (9),
**caractérisé en ce que**
- au moins un organe d'assemblage (10; 13) est prévu pour l'assemblage des tablettes de table (1),
- l'organe d'assemblage étant constitué d'une patte (10) dotée de deux trous (11, 12) et qui peut être vissé par l'un de ces trous (11) sur la tête (4) du noeud de liaison (2) au moyen de la colonne de pose (3), la tête (4) d'un noeud de liaison (2) d'une tablette de table (1) voisine pouvant être fixée dans l'autre trou (12),
- ou étant constitué d'une pince élastique (13) en matière synthétique qui peut être placée à pivotement sur la traverse (6) d'un premier élément de table au moyen d'un premier dispositif d'accrochage (14) et qui peut être pincée sur la traverse (6) d'un deuxième élément de table, voisin du premier élément, au moyen d'un deuxième dispositif d'accrochage (15).

2. Système selon la revendication 1, **caractérisé en ce que**:
- la tête (4) du noeud de liaison (2) présente sur le côté de l'alésage (7) un collet cylindrique (16) dont le diamètre correspond à celui du deuxième trou (12) de la patte (10),
- les traverses (6) qui peuvent être fixées sur les bras (5) du noeud de liaison (2) sont configurées en forme de tube,
- les bras (5) du noeud de liaison (2) peuvent être insérés en même temps qu'une pièce de compression (17) dans les traverses (6), et les pièces de compression (17) peuvent être serrées dans la traverse (6) au moyen de tiges filetées (18), et
- des pièces d'écartement (19) sont prévues, par lesquelles les traverses (6) peuvent être fixées sur la tablette de table (1).

3. Système selon les revendications 1 et 2, **caractérisé en ce que** les deux dispositifs d'accrochage (14, 15) de la pince (13) en matière synthétique sont chaque fois constitués de deux doigts qui chevauchent les traverses (6) sur les deux côtés d'une pièce d'écartement (19), la pince (13) en matière synthétique présentant une poignée (20) permettant son pivotement à la main.

4. Système selon la revendication 1, **caractérisé en ce que**:
- un bouchon en plastique (8) est vissé dans l'alésage fileté (7) de la tête (4),
- ce bouchon en plastique (8) est configuré en forme de chapeau avec un tourillon central (21),
- le diamètre intérieur du chapeau est tel qu'il entoure le collet (16) prévu sur la tête (4) du noeud de liaison (2),
- le diamètre extérieur du chapeau est tel qu'il peut être enfoncé de manière serrée dans le trou (12) d'une patte (10), et
- le tourillon (21) est de configuration conique et moleté de telle sorte qu'il peut être fixé par enfoncement dans l'alésage (7) de la tête (4) du noeud de liaison (2).

5. Système selon l'une des revendications précédentes, **caractérisé en ce que** toutes les tablettes de table (1) présentent la même- structure, mais présentent cependant des modules de différents formats et différentes formes géométriques.

6. Système selon l'une des revendications précédentes, **caractérisé en ce que** les noeuds de liaison (2) sont des pièces coulées en aluminium et les colonnes de pose (3) sont des profilés extrudés en aluminium.

7. Système selon la revendication 1, **caractérisé en ce que** la patte (10) peut être fixée sur le deuxième noeud de liaison (2) au moyen d'une vis moletée, par le trou (12) qui n'est pas vissé sur le premier noeud de liaison (2) par l'intermédiaire de la colonne de pose (3).
